# EUROPEAN PATENT APPLICATION

(11) **EP 4 462 639 A1**
(43) Date of publication of application: **13.11.2024**
(21) Application number: 23290016.7
(22) Date of filing: 12.05.2023
(51) Int. Cl.: H02J 9/06, H02J 3/14

(54) **CRITICAL LOAD ARBITRATION FOR AN UNINT ERRUPTIBLE POWER SUPPLY**

(71) Applicant: Eaton Intelligent Power Limited, Dublin 4 (IE)
(72) Inventor: Dray, Alexandre, 38920 Crolles (FR); Serrano, Fabrice, 38660 Saint Bernard du Touvet (FR)
(74) Representative: Seymour-Pierce, Alexandra Isobel

(57) **Abstract**

A critical load arbitration device (10) for a uninterruptible power supply - UPS - (12) comprising: an arbitration unit (14) configured to decide whether to shut down the power supply to one or more loads (16-16") powered by the UPS (12); and a communication interface (18) configured to generate one or more shutdown commands depending on the decision of the arbitration unit (14), each shutdown command being addressed to a receiver (20-20") associated with a load (16) to be shut down and transmitted to the receiver (20-20") by the communication interface (18).

## Description

### TECHNICAL FIELD

This specification relates to a critical load arbitration for an uninterruptible power supply (UPS).

### BACKGROUND

In a building, not all electrical loads served by the electrical installation, particularly the electrical network, have the same level of criticality during a power failure. For example, lighting circuits and building access control circuits may have priority, while other loads may have a lower priority. Priority refers to the importance of the load still being powered in the event of a power failure, particularly by means of an emergency power supply such as a UPS. Priority can also affect how long a load is powered by the emergency power supply. For example, high priority loads should be powered by the UPS as long as possible, while medium or low priority loads may be powered for a shorter period.

In buildings, there may be different electrical networks serving loads with different priorities. For example, one electrical network may be provided for low and medium priority loads, while another electrical network may be provided for high priority loads. The latter network may be protected by a UPS so that in the event of a power failure, the loads connected to that network will continue to receive power. However, in existing buildings, the separation of electrical networks to provide differentiated power to loads requires costly infrastructure work. In new buildings, this may be simpler, but it requires additional wiring and increases overall costs.

The US patent application US2015039149A1 describes systems and methods that receive electric power from an electric power grid, the systems and methods including: at least one power consuming device that requires electric power to operate; at least one controllable device operably coupled to the at least one power consuming device, the at least one controllable device operable to control a flow of grid-supplied electric power to the at least one power consuming device responsive to power control instructions, wherein each of the at least one power consuming devices has a corresponding power supply value (PSV); a backup power subsystem operably coupled to the at least one power consuming device, the backup power subsystem operable to automatically supply electric power to the at least one power consuming device when a flow of grid-supplied electric power to the at least one power consuming device drops below a threshold; and a client device operable to receive power control messages from a remote system control component and provide power control instructions to the at least one controllable device responsive to the power control messages, wherein a first received power control message instructs the client device to disable a flow of grid-supplied electric power to the at least one power consuming device, and wherein a first power control instruction instructs the at least one controllable device to disable the flow of grid-supplied electric power to the at least one power consuming device and causing activation of the backup power subsystem.

### SUMMARY

This specification describes a critical load arbitration for a UPS.

According to one aspect of this specification, a critical load arbitration device for a UPS is provided, comprising an arbitration unit configured to decide whether to shut down the power supply to one or more loads powered by the UPS; and a communication interface configured to generate one or more shutdown commands depending on the decision of the arbitration unit, each shutdown command being addressed to a receiver associated with a load to be shut down and transmitted to the receiver by the communication interface. The device can be used to extend the functionality of a UPS by distinguishing the shutting down of loads powered by the UPS. For example, the arbitration unit can distinguish between loads to be shut down and critical loads to be still powered in case of a power failure.

In embodiments of the device, the arbitration unit may be further configured to obtain data about the loads powered by the UPS, the data comprising addresses of receivers associated with the loads and priority values associated with the loads, wherein a priority value determines the shutdown of the load. Particularly, the priority values allow to control the decision process for shutting down of loads by the arbitration unit.

In further embodiments of the device, the arbitration unit may be configured to obtain the data from at least one of the following sources: via a network interface from a remote computer; from an internal memory; from an external memory connected to a data interface of the UPS; from a user interface. For example, the data can be downloaded from the remote computer, on which they are provided, or they may be loaded from either an internal or external memory. The data can also be manually entered via a user interface, for example from service personal.

In still further embodiments of the device, the priority value may determine one or more of the following: whether to shut down the load after a power failure has occurred on a power input of the UPS; a time period for shutting down the load after a power failure has occurred on a power input of the UPS. For a less critical load, a priority value may for example determine to shut down the load, whereas for a medium critical load, a priority value may for example determine that the load is shut down only after predefined time period after the occurrence of a power failure. For a highly critical load, a priority value may determine that this load is not shut down but still powered by the UPS after the occurrence of a power failure.

In still further embodiments of the device, the communication interface may be further configured to wirelessly transmit the one or more shutdown commands to the respective receivers, in particular using at least one of the following wireless communication standards: Bluetooth^{®}, in particular Bluetooth^{®} Low Energy; ZigBee^{™}; Wi-Fi^{™}; Matter^{™}; Thread^{™}.

According to a further aspect of this specification, there is provided a UPS comprising a critical load arbitration device as disclosed herein. This kind of UPS may be particularly suitable for installation in building electrical power system with an existing electrical network and does not require substantial changes of the electrical network with regard to the shutting down of loads with different criticality.

According to a still further aspect of this disclosure, there is provided a building electrical power system comprising at least one UPS as disclosed herein; an electrical network connecting one or more power outputs of the at least one UPS to power outlets for connection to loads; and at least one receiver provided for shutting down at least one power outlet from supplying power to a connected load. This building electrical power system does not require an electrical network, which is specifically designed for loads with different criticality, and furthermore allows to use at least on UPS, which may be installed for example in a building junction box.

The at least one receiver may be installed in a power outlet. Thus, no separate devices with receivers have to be managed. A receiver may be for example integrated in the power outlet to be invisible.

According to a yet further aspect of this disclosure, a method for operating a building electric power system as disclosed herein is provided, the method comprising the following: detecting, by the UPS, that a power failure has occurred on a power input of the UPS; signaling, by the UPS, the detected power failure to the critical load arbitration device; deciding, by the critical load arbitration device, about one or more loads powered by the UPS to be shut down and generating respective shutdown commands; transmitting, by the critical load arbitration device, the generated shutdown commands to the one or more receivers being associated with the loads to be shut down; receiving, by the receivers, the shutdown commands and shutting down the power outlets, to which the loads to be shut down are connected.

In an embodiment of the method, the deciding, by the critical load arbitration device, about one or more loads powered by the UPS to be shut down and generating respective shutdown commands may comprise the following: obtaining data about the loads powered by the UPS; determining baes on the obtained data each load among the loads powered by the UPS, which has an associated priority value determining the shutdown of the load in case of a power failure has been occurred on a power input of the UPS ; and generating for each determined load a shutdown command.

Details of one or more embodiments are set forth in the accompanying drawings and the following description. Other features and advantages will be apparent from the description and drawings and from the claims.

### DESCRIPTION OF DRAWINGS

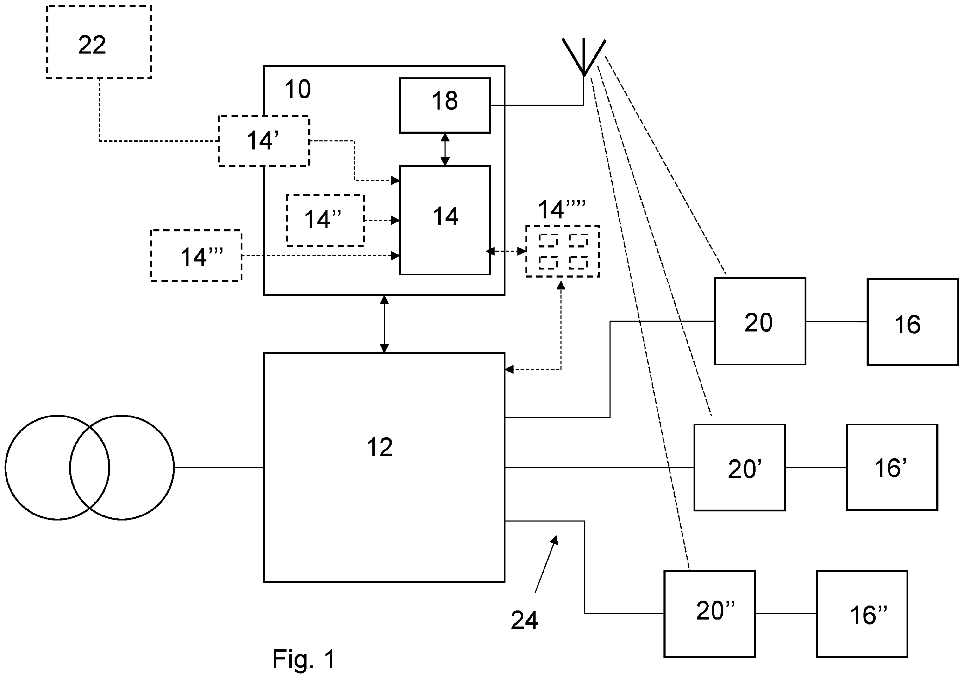

Fig. 1 shows a block diagram of an embodiment of a building electrical power system comprising an embodiment of a UPS and an embodiment of a critical load arbitration device for the UPS.

### DETAILED DESCRIPTION

In the following, functionally similar or identical elements may have the same reference numerals. Absolute values are shown below by way of example only and should not be construed as limiting.

Fig. 1 shows a UPS 12 having a power input connected to an electrical grid that supplies electrical power to the UPS 12. The UPS 12 has at least one power output for supplying one or more loads 16 to 16" with electrical power either from the electrical grid or, in the event of a power failure, with electrical power from, for example, a backup battery system. The loads 16 to 16" are connected to power outlets, e.g. wall outlets in rooms of a building. In particular, the outlets are part of an electrical network 24 installed in the building.

The UPS 12 can be a DIN-rail mountable UPS, e.g., a UPS mounted on a rail in a building junction box. The UPS 12 can be designed to provide backup power to at least a part of the building's electrical network 24 in the event of a power failure on the network side. Thus, the UPS 12 can be installed in the junction box in a manner like circuit breakers, i.e., integrated into building's electrical network 24.

A critical load arbitration device 10 is connected to the UPS 12, for example via a wired or wireless data interface, which allows to exchange data with the UPS 12 particularly in case of a power failure and as described below in detail. The data interface may be for example a wired interface such as a USB (Universal Serial Bus) or a LAN (Local Area Network) interface, and/or a wireless interface such as a Wi-Fi^{™} or Bluetooth^{®} interface. The data interface may be used to signal to the critical load arbitration device 10 a power failure on the electric grid and the switchover to a backup power supply by the UPS 12.

The critical load arbitration device 10 may be implemented by dedicated hardware, for example an ASIC (Application Specific Integrated Circuit) or a (F)PGA ((Field) Programable Gate Array), partly in hard- and software, or entirely in software. For example, the critical load arbitration device 10 may be implemented as an algorithm embedded in a core UPS MCU (Micro-Controller Unit) itself and without any specific and distinct hardware needed.

The critical load arbitration device 10 comprises an arbitration unit 14 and a communication interface 18. The arbitration unit 14 may be implemented by at least one processor executing a firmware or by an ASIC (Application Specific Integrated Circuit) or a (F)PGA ((Field) Programable Gate Array) or a similar device. The communication interface 18 may be a wired, such as Power-line communication (PLC), LAN, particularly Ethernet, USB interface, and/or a wireless, such as Bluetooth^{®}, particularly Bluetooth^{®} Low Energy, ZigBee^{™}, Wi-Fi^{™}, Matter^{™}, Thread^{™} interface. The communication interface 18 may be implemented to support several communication methods, such as wired and wireless and according to several standards, for example PLC, LAN (Ethernet), Bluetooth^{®}, ZigBes^{™}.

The arbitration unit 14 is configured to decide whether to shut down the power supply to one or more loads 16-16" powered by the UPS 12. Particularly, the arbitration unit 14 decides to distinguish between critical and less critical loads and to decide to shut down loads based on this distinguishing. For example, the arbitration unit 14 can decide to shut down all loads except the loads classified as critical for example lighting circuits and access control circuits. Criticality of a load may be determined by a priority value associated with the load. For example, a high priority value may mean a critical load, and a low value a less critical load. An example for priority values may be "3" for loads with high criticality, for example the lighting circuits and access control circuits, "2" for loads with medium criticality, for example computers and communication devices, and "1" for loads with low criticality, for example household and entertainment devices. Other factors may also influence the priority value, for example the power demand of a load. As a UPS battery may have limited power capacity with regard to many home appliances power consumption, the power demand of a load may be one of the most critical factors influencing the priority value. The UPS battery could be very quickly discharged if highly consuming and non-critical loads are not shutdown very quickly in case of a power outage. Thus, highly consuming and non-critical loads may obtain a priority value, which determines a low criticality and can trigger the arbitration unit 14 to very quickly shutdown such loads in order to save the life of the UPS battery. The priority value thus may determine the shutdown of a load, i.e., the shutdown of power supply of a load.

The communication interface 18 is configured to generate one or more shutdown commands depending on the decision of the arbitration unit 14. A shutdown command is addressed to a receiver 20-20" associated with a specific load 16-16" to be shut down. The communication interface 18 generates a shutdown command for a load to be shut down by receiving respective data about the load from the arbitration unit 14, for example an identification assigned to the load. The communication interface 18 may then determine with the received load data an address of a receiver associated with the load and generate the shutdown command with the receiver address and transmit the generated shutdown command to the receiver.

The receiver may be implemented as a separate device, which can be attached to power outlets, for example as plug adapters for plugging into a power outlet and receiving the power socket of a load. Alternatively, the receiver can be installed in a power outlet, i.e., being implemented as part of the power outlet. The receiver may be for example implemented as a wireless circuit breaker, which is integrated in a power outlet and is controllable via wirelessly received commands for opening (shutdown command from the arbitration unit) or closing (powering the load from the UPS).

The receivers 20-20" are configured to receive shutdown commands from the communication interface 18 and comprise a wired or wireless interface for receiving the shutdown commands, for example a Power-line communication (PLC), LAN, particularly Ethernet, USB interface, and/or a Bluetooth^{®}, particularly Bluetooth^{®} Low Energy, ZigBee^{™}, Wi-Fi^{™}, Matter^{™}, Thread^{™} interface.

Each receiver 20-20" may have a unique identifier, which may form an identification assigned to the load, to which receiver is assigned. The unique identifier may also assigned to a priority value of the respective load.

As described above, the arbitration unit 14 may decide about the shutting down of a load based on its criticality, which may depend on a priority value assigned to the load. The priority value may be part of data about the loads 16-16" powered by the UPS 12, and the arbitration unit 14 may be configured to obtain such data from one or more sources, for example via a network interface 14' from a remote computer 22, which may for example execute a program for managing loads, from an internal memory 14", which may for example store a database of loads powered by the UPS 12 and their assigned priority values as well as associated receiver addresses, from an external memory 14‴ connected to a data interface of the UPS 12, for example a hard drive or memory stick storing the data and being connected to a USB interface of the UPS 12, from a user interface 14ʺʺ, which may be connected to the UPS 12 and/or the critical load arbitration device 10 and usable to manually enter the data about loads, from the loads 16-16", and/or from the receivers 20-20" associated with the loads 16-16".

The data about the loads powered by the UPS may also comprise a type/category of a load. An algorithm may be provided for auto-detecting the load type/category powered by the UPS. This may comprise that the UPS is configured to autonomously identify which load is connected to which outlet, and it may further comprise that the UPS is configured to determine the load type/category. Particularly, this may include a machine learning algorithm trained to automatically recognize the load type/category. The training and recognizing may be based on electrical signatures of loads. Each load has its own electrical signature, which is for example visible on its current/voltage waveforms. Thus, the machine learning algorithm may be trained with a dataset of known electrical signatures of known loads of known types/categories. In operation, the trained machine learning algorithm may then automatically recognize unknown loads with a good level of accuracy based on the electrical signatures of the unknown loads. The output of the algorithm may be a type and/or category of a load. This automatic recognition of the UPS powered loads may be always up-to-date, for example when it is real-time, and it may be also less error-prone than information entered by humans. The automatically recognized type/category of loads may be processed by the arbitration unit to decide about shutting down the power supply of one or more loads powered by the UPS. For example, the recognized types/categories of loads may determine when to shut down the loads. An example of types of loads comprises high/medium/low power consuming load, and an example of categories of loads comprises low/medium/highly critical load.

As described above, the priority value of a load determines the shutdown of the load. This may comprise one or more of whether to shut down the load after a power failure has occurred on a power input of the UPS, a time period for shutting down of the load after a power failure has occurred on a power input of the UPS. For example, a priority value may determine that the load is shut down immediately or only after a certain time period has been passed after a power failure has occurred, such as several minutes or even hours. Particularly loads with a high-power demand and a low criticality may have a priority value, which determines an immediate shutting down after a power failure has occurred, while loads with medium power demand and a medium criticality may have a priority value, which determines a time period for shutting down after a power failure has occurred. Thus, with the priority values a fine-grained shutting down scheme of loads may be implemented.

An embodiment of a method for operating a building electric power system is described in the following.

The method comprises a detecting, by the UPS 12, that a power failure has occurred on a power input of the UPS 12. This corresponds to the typical task of an UPS. The method further comprises a signalling, by the UPS 12, of the detected power failure to the critical load arbitration device 10. The signalling may be for example implemented by a flag set by the UPS 12 in a register that a power failure has been occurred and that is constantly read out by the critical load arbitration device 10, or by generating an active signal transmitted to the critical load arbitration device 10. The method yet further comprises deciding, by the critical load arbitration device 10, about one or more loads 16-16" powered by the UPS 12 to be shut down and generating respective shutdown commands, This may particularly comprise obtaining data about the loads 16-16" powered by the UPS 12; determining based on the obtained data each load among the loads 16-16" powered by the UPS 12, which has an associated priority value determining the shutdown of the load in case of a power failure has been occurred on a power input of the UPS 12; and generating for each determined load a shutdown command. For example, the critical load arbitration device 10 may load the data from an internal or external memory and process the obtained data by determining loads with a priority value lower than a predefined priority value. Among the so determined loads, the critical load arbitration device 10 may then determine the loads, which can be immediately shutdown. For this subset of loads, shutdown commands may then be generated by the critical load arbitration device 10 may. Furthermore, the method comprises the transmitting of the generated shutdown commands by the critical load arbitration device 10 to the one or more receivers 20-20" being associated with the loads 16-16" to be shut down. The transmission can be for example performed wirelessly using a predefined communication standard such as Bluetooth^{®} or ZigBee^{™} or another one of the herein mentioned standards. Finally, the method comprises the receiving, by the receivers 20-20", of the shutdown commands and shutting down the power outlets, to which the loads 16-16" to be shut down are connected.

### Reference numerals

- 10: critical load arbitration device for a UPS
- 12: UPS
- 14: arbitration unit
- 16-16": load
- 18: communication interface
- 20-20": receiver
- 22: remote computer
- 24: electric network

## Claims

1. A critical load arbitration device (10) for a uninterruptible power supply - UPS - (12) comprising:
• an arbitration unit (14) configured to decide whether to shut down the power supply to one or more loads (16-16") powered by the UPS (12); and
• a communication interface (18) configured to generate one or more shutdown commands depending on the decision of the arbitration unit (14), each shutdown command being addressed to a receiver (20-20") associated with a load (16-16") to be shut down and transmitted to the receiver (20-20") by the communication interface (18).

2. The device (10) of claim 1, wherein the arbitration unit (14) is further configured to obtain data about the loads (16-16") powered by the UPS (12), the data comprising addresses of receivers (20-20") associated with the loads (16-16") and priority values associated with the loads (16-16"), wherein a priority value determines the shutdown of the load (16-16").

3. The device (10) of claim 2, wherein the arbitration unit (14) is configured to obtain the data from at least one of the following sources: via a network interface (14') from a remote computer (22); from an internal memory (14"); from an external memory (14‴) connected to a data interface of the UPS (12); from a user interface (14"").

4. The device (10) of claim 2 or 3, wherein the priority value determines one or more of the following: whether to shut down the load (16-16") after a power failure has occurred on a power input of the UPS (12); a time period for shutting down of the load (16-16") after a power failure has occurred on a power input of the UPS (12).

5. The device (10) of any preceding claim, wherein the communication interface (18) is further configured to wirelessly transmit the one or more shutdown commands to the respective receivers (20-20"), particularly using at least one of the following wireless communication standards: Bluetooth^{®}, particularly Bluetooth^{®} Low Energy; ZigBee^{™}; Wi-Fi^{™}; Matter^{™}; Thread^{™}.

6. An uninterruptible power supply - UPS - (12) comprising a critical load arbitration device (10) of any preceding claim.

7. A building electric power system comprising:
• at least one UPS (12) of claim 6;
• an electric network (24) connecting one or more power outputs of the at least one UPS to power outlets for connection to loads (16-16"); and
• at least one receiver (20-20") provided for shutting down at least one power outlet from supplying power to a connected load (16-16").

8. The building electric power supply system of claim 7, wherein the at least one receiver (20-20") is installed in a power outlet.

9. A method for operating a building electric power system of claim 7 or 8, the method comprising the following:
• detecting, by the UPS (12), that a power failure has occurred on a power input of the UPS (12);
• signaling, by the UPS (12), the detected power failure to the critical load arbitration device (10);
• deciding, by the critical load arbitration device (10), about one or more loads (16-16") powered by the UPS (12) to be shut down and generating respective shutdown commands;
• transmitting, by the critical load arbitration device (10), the generated shutdown commands to the one or more receivers (20-20") being associated with the loads (16-16") to be shut down; and
• receiving, by the receivers (20-20"), the shutdown commands and shutting down the power outlets, to which the loads (16-16") to be shut down are connected.

10. The method of claim 9, wherein the deciding, by the critical load arbitration device (10), about one or more loads (16-16") powered by the UPS (12) to be shut down and generating respective shutdown commands comprising the following:
• obtaining data about the loads (16-16") powered by the UPS (12);
• determining based on the obtained data each load among the loads (16-16") powered by the UPS (12), which has an associated priority value determining the shutdown of the load in case of a power failure has been occurred on a power input of the UPS (12); and
• generating for each determined load a shutdown command.
